Europäisches Patentamt

European Patent Office

Office européen des brevets

(19)

(11) Veröffentlichungsnummer: **0 295 599**
**A1**

## (12) EUROPÄISCHE PATENTANMELDUNG

(21) Anmeldenummer: **88109352.0**

(22) Anmeldetag: **13.06.88**

(51) Int. Cl.⁴: **H02H 5/08**

(30) Priorität: **12.06.87 DE 3719727**

(43) Veröffentlichungstag der Anmeldung:
**21.12.88 Patentblatt 88/51**

(84) Benannte Vertragsstaaten:
**ES GR**

(71) Anmelder: **Lauerer, Friedrich**
**Karwendelstrasse 12a**
**D-8033 Krailling(DE)**

(72) Erfinder: **Lauerer, Friedrich**
**Karwendelstrasse 12a**
**D-8033 Krailling(DE)**

(54) **Elektrische Auslöseeinrichtung.**

(57) Die beschriebene elektrische Abschalteinrichtung dient zur Gefahrenabwehr, insbesondere als Schutzmaßnahme gegen den Stromtod in der Badewannen für den Fall, daß ein Haartrockner in die mit Wasser gefüllte Badewanne gerät. Die Abschalteinrichtung funktioniert in einfachster Weise bei Wechselstrombetrieb mit Hilfe eines bistabilen gepolten Relais (1, 2, 3), das die zur Abschaltung notwendige Spannung von einem Spannungsteiler bezieht, der aus zwei gegeneinander gerichteten Gleichrichtern (4, 5) besteht, während der andere Anschluß der Relaisspule mit einer Sonde (S) verbunden ist, die bei Berühren mit geerdeten oder spannungsführenden Wasser den Stromfluß durch die Relaisspule und damit eine Abschaltung bewirkt.

EP 0 295 599 A1

Fig. 1

## Elektrische Auslöseeinrichtung

Die Erfindung betrifft eine Auslöseeinrichtung für elektrische Schutzschaltungen wie Fehlerstrom-Schutzschalter bzw. Sicherheitsschaltungen, wie sie z.B. in elektrischen Hand-Haartrocknern Verwendung finden können.

Ein wesentliches Problem ist die Tatsache, daß nur eine relativ geringe Auslöseenergie zur Verfügung steht. Außerdem besteht im Grenzfalle, d.h. wenn die zur Verfügung stehende Auslösespannung zum zügigen Durchschalten nicht ausreicht, die Gefahr des Kontaktflatterns.

Die Erfindung hat sich die Aufgabe gestellt, die aufgezeigten Probleme zu lösen. Diese Aufgabe wird durch die im kennzeichnenden Teil des Anspruches 1 gelöst. Die folgenden Unteransprüche enthalten vorteilhafte Weiterbildungen der Erfindung.

In den Zeichnungen sind Ausführungsbeispiele der Erfindung wiedergegeben.

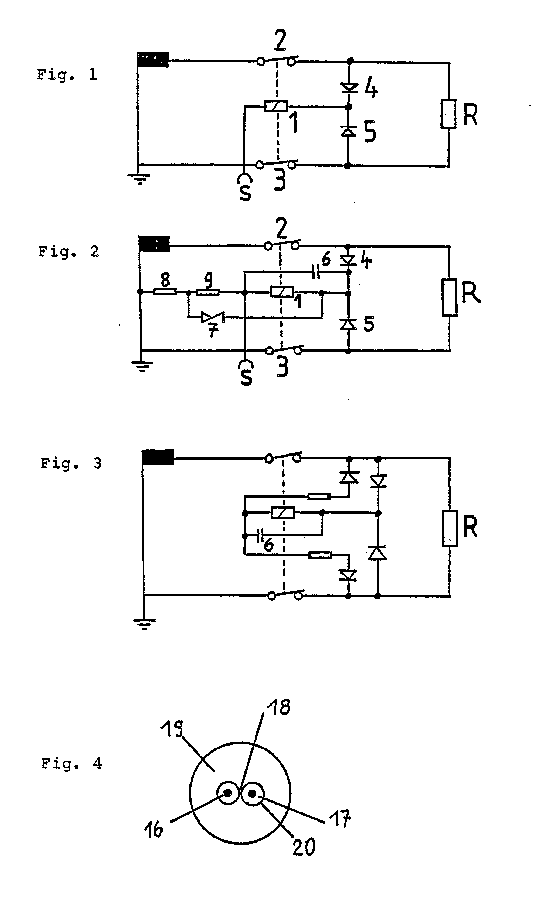

In Fig. 1 ist der Verbraucherwiderstand R über zwei Unterbrechungskontakte 2 und 3 und gegebenenfalls über eine Steckvorrichtung an die Stromquelle (z.B. Netzspannung 220 V) angeschlossen.

Erfolgt eine leitende Verbindung, z.B. durch das in den Haartrockner eingedrungene Wasser, von der Sonde S zur Erde E, oder zu einem Pol des Netzes, dann wird das bipolare gepolte Relais umgeschaltet, in diesem Falle ausgeschaltet.

In Fig. 2 wird der Kondensator 6 ständig aufgeladen. Die Kondensatorspannung wird durch die Zenerdiode 7 auf einen genau festgelegten Wert begrenzt und hat die Funktion einer Bereitschaftsenergie. Wenn nun zwischen Sonde S und Erde E, oder zwischen Sonde und einem spannungsführenden Leiter bzw. dem Neutralleiter eine leitende Verbindung zustande kommt (z.B. wenn ein Haartrockner in die mit Wasser gefüllte Badewanne fällt), dann wird sowohl der Kondensator 6 weiter aufgeladen als auch das Relais so erregt, daß es ausschaltet.

In Fig. 3 wird die Kondensator 6 über einen Grätzgleichrichter ge speist, so daß jede Halbwelle zur Aufladung beitragen kann.

In Fig. 4 ist im Schnitt eine zweiadrige Geräteleitung gegeben, die den Erfindungsgedanken gemäß Anspruch 8 verdeutlicht. Sie besteht aus dem üblichen Stromleiter, der Aderisolierung (16, 17) und dem Mantel (19). An der Außenhülle (20 bzw. 21) oder im Raum zwischen den Aderisolierungen (18) liegt vom Anfang bis zum Ende der Leitung durchgehend eine leitende Oberfläche, beispielsweise aus Leitlack, Leitspray oder Leitkleber. Diese leitende Schicht dient als Sonden oder Schutzleiter für solche Schutzschaltungen, bei denen der Schutzleiterwiderstand nicht unbedingt niederohmig sein muß.

Durch diese Anordnung kann z.B. eine zweiadrige Geräteleitung ohne Durchmessererhöhung als dreiadrige, d.h. als eine zweiadrige mit Sonden- oder Schutzleiter dienen. Die Schutzleiteranschlüsse an den Enden einer Leitung sind denkbar einfach herzustellen. Die leitende Aderumhüllung 18 wird z.B. mit einer Metallschelle befestigt, die gleichzeitig als Zugentlastungschelle dient.

## Ansprüche

1. Elektrische Auslöseeinrichtung, bei der eine mit der Auslösespannung zu beaufschlagende Relaisspule (1) auf Abschaltkontakte (2 und 3) wirkt, dadurch gekennzeichnet, daß der eine Anschluß der Relaisspule (1) über zwei entgegengesetzt gerichtete Gleichrichter (4 und 5) gespeist wird, während der andere Anschluß zur Sonde führt.

2. Einrichtung nach Anspruch 1, dadurch gekennzeichnet, daß ein bistabiles gepoltes Relais zur Verwendung kommt und parallel zur Relaisspule (1) ein Kondensator (6) liegt.

3. Einrichtung nach Anspruch 1 oder 2, dadurch gekennzeichnet, daß der Kondensator (6) ständig aufgeladen wird und ein Spannungsbegrenzer (7) an diesem Kondensator (6) in der Mitte eines Spanungsteilers (8 und 9) in der Weise angeschlossen ist, daß einerseits die notwendige Aufladespannung erzeugt und andrerseits der Spannungsbegrenzer die zur Relaisauslösung notwendige Auslösespannung nicht begrenzen und damit unwirksam machen kann.

4. Einrichtung nach einem der vorhergehenden Ansprüche, dadurch gekennzeichnet, daß die Speisung des Kondensators (6) über eine Grätz-Gleichrichterschaltung (10, 11, 12, 13) erfolgt.

5. Einrichtung nach einem der vorhergehenden Ansprüche, dadurch gekennzeichnet, daß dieselbe für Fehlerstrom-Schutzschalter verwendet wird.

6. Einrichtung nach einem der vorhergehende Ansprüche, dadurch gekennzeichnet, daß dieselbe in einem elektrischen Gerät, z.B. einem Hand-Haartrockner, einem Rasenmäher, einer Handbohrmaschine, einer Spritzpistole, einem Hochdruckreiniger oder dgl. eingebaut ist und als Sensoren leitende Flächen dienen, die im Gerät berührungssioher überall dort und in der Weise eingebaut sind, daß eindringende Flüssigkeit zuerst mit den Sensoren und dann erst mit einem spannungsführenden Teil in Berührung kommt.

7. Einrichtung nach Anspruch 4, dadurch gekennzeichnet, daß die Strecke von der Außenhülle des Elektrogerätes zur Sonde wesentlich größer oder kleiner ist als die Strecke von der Sonde bis zu einem spannungsführenden Teil.

8. Isolierte Stromleitung, insbesondere geeignet zum Anschluß eines Elektrogerätes nach einem der vorhergehenden Ansprüche, dadurch gekennzeichnet, daß eine oder mehrere Aderisolierungen (16, 17) oder die Flächen zwischen diesen Isolierungen (18) oder innerhalb der Aderisolierung selbst, durchgehend vom Stecker bis zum Elektrogerät eine leitende Schicht, z.B. aus Leitlack, Leitspray gegeben ist, die als Schutz- oder Sondenleitung dient.

9. Einrichtung nach einem der vorhergehenden Ansprüche, dadurch gekennzeichnet, daß die Auslöseeinrichtung im Stecker des Gerätes untergebracht ist und die Sondenzuleitung gemäß Anspruch 8 erfolgt.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 464 582 (T. ARAGAKI) <br> * Spalte 7, Zeile 37 - Spalte 10, Zeile 20; Figuren 5,6 * <br> --- | 1,2 | H 02 H 5/08 |
| A | FR-A-2 500 210 (M. OSMOND) <br> * Seite 5, Zeile 30 - Seite 6, Zeile 2 * <br> --- | 1 | |
| P,X | EP-A-0 235 859 (NORTH AMERICAN PHILIPS CORP.) <br> * Das ganze Dokument * <br> ----- | 1,2 | |

RECHERCHIERTE SACHGEBIETE (Int. Cl.4)

H 02 H
G 08 B

Der vorliegende Recherchenbericht wurde für alle Patentansprüche erstellt

| Recherchenort | Abschlußdatum der Recherche | Prüfer |
|---|---|---|
| DEN HAAG | 07-09-1988 | LIBBERECHT L.A. |

EPO FORM 1503 03.82 (P0403)